Europäisches Patentamt

(19) European Patent Office

Office européen des brevets

(11) Numéro de publication: **0 219 519**
**B1**

(12) **FASCICULE DE BREVET EUROPEEN**

(45) Date de publication du fascicule du brevet: **04.07.90**

(51) Int. Cl.⁵: **G 01 N 29/04**

(21) Numéro de dépôt: **86902419.0**

(22) Date de dépôt: **15.04.86**

(86) Numéro de dépôt international:
**PCT/FR86/00124**

(87) Numéro de publication internationale:
**WO 86/06169 23.10.86 Gazette 86/23**

(54) **PROCEDE NON DESTRUCTIF POUR DETERMINER AU MOINS UN POINT D'UN FRONT DE FISSURATION DANS UNE PIECE ET DISPOSITIF POUR LA MISE EN O EUVRE DU PROCEDE.**

(30) Priorité: **16.04.85 FR 8505696**

(43) Date de publication de la demande:
**29.04.87 Bulletin 87/18**

(45) Mention de la délivrance du brevet:
**04.07.90 Bulletin 90/27**

(84) Etats contractants désignés:
**AT BE CH DE GB IT LI LU NL SE**

(56) Documents cités:
**US-A-3 332 278**
**US-A-42 928 48**
**US-A-44 413 69**

**Japanese Journal of Applied Physics, volume 23, suppl. 23-1, Proceedings of 4th Symposium on Ultrasonic Electronics, 1983, Tokyo (JP) H. Nakazawa et al.:"Ultrasonic monitoring techniques of crack growth and fracture mechanics evaluation of materials", pages 12-16**

(73) Titulaire: **ECOLE CENTRALE DES ARTS ET MANUFACTURES**
**Grande Voie des Vignes**
**F-92290 Chatenay-Malabry (FR)**

(72) Inventeur: **BOUAMI, Driss J 211 Résidence ECP**
**Appartement 8 Immeuble 38**
**Agdan Rabat (MA)**
Inventeur: **DE VADDER, Daniel**
**15, rue de Chateaubourg**
**F-91370 Verrières le Buisson (FR)**

(74) Mandataire: **Peuscet, Jacques et al**
**Cabinet Peuscet 68, rue d'Hauteville**
**F-75010 Paris (FR)**

Courier Press, Leamington Spa, England.

## Description

La présente invention concerne un procédé pour détecter la forme et/ou la position d'un front de fissuration à l'intérieur d'une pièce, notamment métallique, soumises à des efforts qui en provoquent la fissuration ou la déchirure ductile.

On sait qu'il est important de pouvoir suivre l'évolution de la fissuration d'une éprouvette soumise à des efforts de fatigue et/ou à un chargement monotone. La définition de la forme du front de fissuration et la détermination de sa position à un instant donné et de son déplacement au cours du temps est utile pour l'évaluation des caractéristiques mécaniques du matériau dont est constituée l'éprouvette. En particulier la ténacité du matériau, c'est-à-dire sa résistance à une brutale progression des fissures, peut être déduite du calcul de l'intégrale de Rice, qui est l'intégrale sur un contour fermé sur la fissure de la densité d'énergie (voir à cet égard l'article de Rice J. R.: "Fracture" Vol. II. p. 191 Leibowitz 1968 ed. Academic Press"). Il est donc important de pouvoir donner avec précision la forme et la position instantanée du front de fissuration d'une éprouvette.

Plusieurs méthodes sont utilisées pour cette détermination dont la méthode dite multiéprouvette: selon cette procédure, on utilise une pluralité d'éprouvettes que l'on soumet pendant un temps plus ou moins long aux efforts désirés puis, après avoir arrêté la mise sous contrainte de l'éprouvette à un moment donné, on marque notamment par oxydation, la zone fissurée, après quoi on casse l'éprouvette pour pouvoir observer et mesurer la position et la forme du front de fissuration. Cette technique à essais destructifs présente essentiellement deux inconvénients; d'une part, elle nécessite la mise en oeuvre d'un grand nombre d'éprouvettes, ce qui implique une augmentation du coût de l'étude et du temps nécessaire; d'autre part, en raison de la pluralité des éprouvttes mises en oeuvre, on se heurte à l'hétérogénéité existant entre les constitutions des différentes éprouvettes.

On a proposé d'étudier la progression des fronts de fissuration par des méthodes non destructives qui se basent ou bien sur une observation de la progression de la fissure en bord de pièce, ou bien sur une méthode, notamment mécanique ou électrique, permettant de positionner une ligne rectiligne constituant approxmativement la ligne moyenne du front de fissuration réel. L'inconvénient de ces méthodes est que l'on ne peut déterminer ni la forme exacte du front de fissuration ni l'évolution de cette forme au cours de la fissuration, de sorte qu'il faut faire une hypothèse sur la forme des courbes correspondant au front de fissuration pour pouvoir calculer les éléments servant à l'évaluation de la ténacité du matériau. Ces méthodes non destructives présentent donc l'inconvénient d'être imprécises en raison de l'absence de détermination de la forme et de la position exacte du front de fissuration.

Parmi les méthodes non destructives du type ci-dessus défini, un procédé a déjà été proposé (voir dans Japanese Journal of Applied Physics, volume 23, suppl. 23-1, Proceedings of 4th Symposium on Ultrasonic Electronics, 1983, l'article de H. Nakazawa et al.: "Ultrasonic monitoring techniques of crack growth and fracture mechanics evaluation of materials" pp. 12—16).

Selon ce procédé, on utilise une sonde placée au-dessus de l'éprouvette et une autre sonde placée à une extrémité de l'éprouvette et on envoie, dans l'éprouvette soumise à fissuration, des faisceaux d'ultrasons dont l'un a un axe disposé perpendiculairement au plan de fissuration. L'amplitude des signaux réfléchis subit une variation lorsque les signaux recontrent une fissuration. Ce procédé, qui permet de suivre la croissance d'une fissure, prévoit l'utilisation de deux sondes; la précision de la détermination du front de fissure demande à être améliorée.

On a également proposé une méthode mettant en oeuvre un "traducteur" générateur d'ultrasons (voir à cet égard l'article "An Ultrasonic Crack Growth Monitor" par W.G. Clark et L. J. Ceschini, Materials Evaluation, Août 1969, pages 180 à 184). Selon ce procédé, on envoie dans l'éprouvette soumise à fissuration un faisceau d'ultrasons obtenu à partir d'un "traducteur" plan; l'axe de ce faisceau divergent est disposé perpendiculairement au plan de fissuration et le déplacement du front de fissuration par rapport à l'axe du faisceau d'ultra-sons entraîne une modification dans l'amplitude de la réception. Le principe du procédé est de déplacer le "traducteur" de façon à maintenir constante la réception et l'on suppose, alors, que le déplacement du "traducteur" est égal au déplacement du front de fissuration. En fait, cette méthode ne donnerait avec précision le déplacement du front de fissuration que si celui-ci conservait une forme constante au cours de son déplacement dans le matériau, ce qui n'est pas le cas. En outre, cette méthode ne permet de définir ni la forme effective du front de fissuration, ni la position précise du fond ou bout de fissure.

La présente invention a pour but de proposer un procédé non destructif qui permet de définir, dans une pièce ou une éprouvette, notamment métallique, soumise à des efforts de fatigue cycliques ou à un chargement monotone, l'avancée du front de fissuration ou du front de déchirure ductile et la forme de ce front. L'invention met en oeuvre un "traducteur" générateur d'ultra-sons et utilise un phénomène d'effet de bord qui a déjà été décrit. On sait, en effet, (voir la publication de De Vadder, Azou, Bastien, Saglio—"Detection des grands défauts plans mal orientés à l'aide de traducteurs ultrasonores focalisés", Huitième Conférence Mondiale sur les Essais Non Destructifs—Cannes, Septembre 1976) que si l'on envoie un faisceau d'ultra-sons focalisé sur un défaut quasi-plan à bords aigus à l'intérieur d'une pièce, la focalisation étant assurée sur le plan du défaut, et si le plan du défaut n'est pas perpendiculaire à l'axe du faisceau d'ultra-sons, dans ce cas l'écho obtenu en réception présente un maximum quand le faisceau arrive sur le bord du défaut.

Selon l'invention, on a imaginé d'utiliser l'effet de bord ci-dessus mentionné pour définir le front de fissuration dans une pièce sous contrainte. Il convient de noter que l'effet de bord obtenu avec un faisceau d'ultra-sons convergent n'avait, jusqu'ici, été utilisé que pour définir les bordures d'un défaut à l'intérieur d'une pièce, alors qu'au contraire, la progression d'une fissure de fatigue à l'intérieur d'une éprouvette n'avait été étudiée qu'au moyen d'un faisceau d'ultra-sons divergent, dont l'axe était perpendiculaire au plan de fissuration. Selon l'invention, on utilise un faisceau d'ultra-sons convergent pour repérer la position du front de fissuration et son éventuel déplacement au cours du temps. Jusqu'à présent, un tel faisceau n'avait été utilisé que pour le repérage d'un défaut statique, alors que l'invention décrit l'utilisation de l'effet de bord pour le repérage en continu d'une fissure évolutive.

La présente invention a, en conséquence, pour objet un procédé pour détecter la position d'au moins un point d'un front de fissuration à l'intérieur d'une pièce comportant, sensiblement dans un plan P, une fissuration ou une déchirure ductile de part et d'autre d'un plan moyen $P_o$ perpendiculaire à P, ledit procédé consistant à envoyer sur le plan de fissure P un faisceau incident d'ultrasons d'axe A, à repérer sur un organe récepteur l'intensité de l'écho obtenu par diffraction sur P et à en déduire une évaluation de la position du fond de fissure caractérisé par le fait que:

—si le plan P n'est pas défini de façon suffisamment précise, on détermine ledit plan P de façon connue, en mesurant le temps de vol de l'onde ultra-sonore qu'il diffracte;

—on utilise ensuite un faisceau incident d'ultrasons, qui est focalisé de telle façon que le plan P coupe sa zone utile et fasse avec son axe A, un angle α compris entre 10° et 80° environ;

—on oriente ledit faisceau de sorte que le plan Q normal à P passant par A soit sensiblement perpendiculaire au front de fissuration;

—on déplace l'axe A vers le front de fissuration jusqu'au repérage d'un maximum de l'écho, le point S, qui est l'intersection de A et P, étant le fond de fissure dans le plan Q.

Selon un mode préféré de mise en oeuvre du procédé selon l'invention, l'angle α est compris entre 60 et 75°C; on commence la détection en amenant le plan Q à être sensiblement confondu avec $P_o$ pour déterminer le fond de fissure $S_o$ situé dans $P_o$.

Si l'on désire suivre le déplacement selon une direction D du fond de fissuration au cours du temps, on assure une translation alternative de l'axe A du faisceau d'ultra-sons parallèlement à la direction D de la fissuration, de part et d'autre de la position qui a donné lieu au repérage de S et, dès que l'on constate une variation significative de la position de l'axe A du faisceau incident pour le maximum de l'écho, on repère la nouvelle position S' du fond de fissure et on remplace S par S' comme point de référence de la translation alternative de A.

Si, au contraire, on désire définir tout ou partie de la forme du front de fissuration dans la pièce étudiée, après avoir déterminé le fond de fissure $S_0$ situé dans $P_0$ on décale l'axe A du faisceau perpendiculairement au plan $P_0$ pour l'amener dans un plan $P_1$ parallèle à $P_0$, on déplace ensuite l'axe A parallèlement à $P_0$ jusqu'au repérage d'un maximum de l'écho pour positionner le fond de fissure dans $P_1$ et ainsi de suite, de proche en proche, jusqu'à ce que la tangente T au front de fissuration ainsi défini fasse avec sa position initiale dans la séquence un angle β prédéterminé compris entre 5 et 30° environ; si l'on veut poursuivre ensuite la définition du front de fissuration, on ré-oriente l'axe A de façon que le plan Q fasse avec sa position initiale dans la séquence un angle inférieur à 2β, de préférence compris entre β et 2β et, mieux encore, voisin de β, et on imprime à nouveau à l'axe A une succession de séquences formées par un déplacement en vue de la détection d'un maximum de l'écho et un décalage transversal par rapport audit déplacement. Dans ce type de mise en oeuvre, on préfère que l'angle β soit compris entre 10 et 20°.

Selon une première variante de mise en oeuvre du procédé destiné à définir la forme du front de fissuration et/ou à suivre le déplacement du front de fissure, après ré-orientation de l'axe A, on déplace ledit axe parallèlement à $P_0$ et on le décale transversalement perpendiculairement à $P_0$; dans une autre variante, après la ré-orientation de l'axe A, on déplace A parallèlement à l'intersection de P avec le plan Q et on le décale transversalement perpendiculairement à Q.

La présente invention a également pour objet un dispositif permettant la mise en oeuvre du procédé tel que ci-dessus défini. Ce dispositif comporte des moyens de fixation d'une pièce étudiée, des moyens pour imprimer à ladite pièce des efforts mécaniques aboutissant à provoquer dans un plan P de la pièce une fissuration ou une déchirure ductile, au moins un "traducteur" générateur d'ultra-sons susceptible de donner naissance à un faisceau incident focalisé et au moins un récepteur susceptible de repérer l'intensité de l'écho provenant d'une zone de la pièce, caractérisé par le fait que le "traducteur" fournit un faisceau incident d'ultra-sons focalisé de telle sorte que le plan P coupe sa zone utile et fasse avec son axe A une angle α compris entre 10 et 80° environ et que le dispositif comporte des moyens d'orientation de l'axe A autour d'un axe perpendiculaire P, des moyens de déplacement en translation de l'axe A parallèlement à une première direction du plan P et des moyens de décalage transversal par une translation de l'axe A parallèlement à une deuxième direction du plan P.

Selon un mode préféré de réalisation du dispositif selon l'invention, l'angle α est compris entre 60 et 75°; les moyens de déplacement de l'axe A en translation sont assujettis à un moyen de commande permettant d'assurer soit une translation continue jusqu'au repérage d'un maximum d'écho par un récepteur suivie d'un mouvement retour, soit une translation alternative autour d'un point de référence, pour lequel le récepteur repère un maximum d'écho, avec mémorisation dudit point de référence au cours du temps; les moyens de décalage transversal de l'axe A provoquent une translation dudit axe selon une deuxième direction, qui est perpendiculaire à la première direction; les moyens de déplacement en translation de l'axe A assurent une translation sur une première direction unique positionnée par rapport aux moyens de fixation de la pièce; les moyens d'orientation et de déplacement ou décalage en translation de l'axe A sont, à partir de la détection du fond de fissure $S_0$ situé dans le plan moyen $P_0$ de part et d'autre duquel est disposé le front de fissuration, commandés de façon automatique par un programmateur, la position géometrique de tout ou partie du front de fissuration et son déplacement au cours du temps étant mémorisés informatiquement en vue d'une restitution numérique et/ou graphique.

Le traducteur, qui est utilisé dans le dispositif selon l'invention, peut être de n'importe lequel des types connus. On pourra, notamment, utiliser, un "traducteur" plan, focalisé par une lentille plan-concave ou un "traducteur" dont la face d'extrémité est concave, ou pluralité de "traducteurs" élémentaires focalisés électroniquement à l'émission ou à la réception. Dans ce dernier cas, le translations et orientations du faisceau peuvent être assurées électroniquement, sans déplacements des traducteurs, par des moyens connus.

Pour assurer le couplage entre le "traducteur" générateur d'ultra-sons et la pièce à étudier, on utilise un liquide de couplage, par exemple de l'eau, un hydrocarbure ou du mercure. Le "traducteur" est constitué, de façon connue, d'une couche de matériau piézo-électrique métallisée sur les deux faces, lesdites deux faces étant reliées à un générateur de tension alternative; sous l'effet du champ électrique créé par le générateur de tension, le matériau piézo-électrique se met à vibrer, ce qui produit le faisceau d'ultra-sons désiré. Si le matériau piézo-électrique est plan, le faisceau produit est naturellement divergent et l'on peut le faire converger en accolant au matériau piézo-électrique une lentilleplan-concave réalisée, par exemple, en un matériau plastique tel que celui connu sous la dénomination commerciale "araldite". Si le matériau piézo-électrique a la forme d'une coupole concave, le faisceau obtenu est directement convergent. On peut utiliser une mosaïque de "traducteurs" élémentaires répartis à la surface de la pièce à étudier et, dans ce cas, la focalisation du faisceau peut être obtenue à l'émission ou à la réception; quand on focalise à l'émission, on excite les différentes "traducteurs" élémentaires avec un décalage pour produire une onde sphérique et le réglage du décalage permet de régler la convergence, l'orientation et la translation de l'axe de focalisation. Si l'on focalise à la réception, on considère chaque point de la zone insonisée comme un émetteur secondaire et on traite les réceptions reçues de chacun de ces émetteurs secondaires en reconstituant l'onde émise à partir d'un point donné de la zone insonifiée. On peut également utiliser des "traducteurs" électrodynamiques: dans cette technique, on applique au matériau testé un champ magnétique constant et on y provoque une circulation électrique des courants de Foucault créés par un bobinage extérieur, qui génère un champ variable; il en résulte, dans le matériau testé, des forces de Lorentz qui sont variables d'un point à l'autre, ce qui provoque une excitation du matériau testé lui-même et on peut focaliser cette émission sur une zone du matériau générateur. L'invention n'est aucunement limitée à un quelconque type de traducteur générateur d'ultra-sons. Les ultra-sons utilisés ont en général une fréquence de quelques MHz et sont émis par trains d'ondes fournis à une fréquence de récurrence pouvant atteindre quelques KHz.

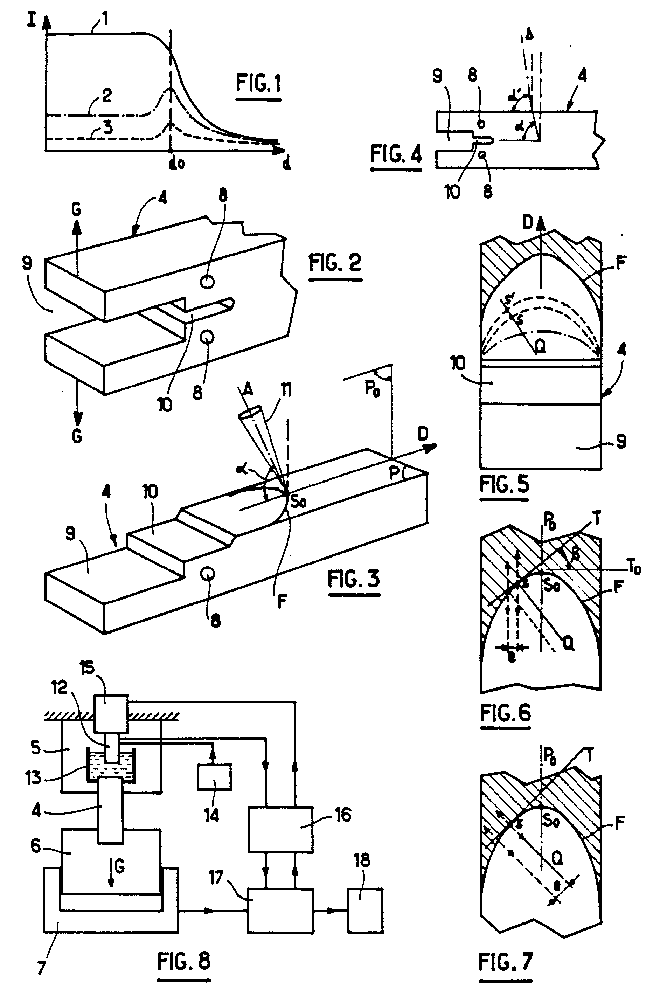

L'inclinaison du faisceau d'ultra-sons par rapport au plan de fissuration est une caractéristique essentielle de la mise en oeuvre de l'invention. Si le faisceau d'ultra-sons utilisé est perpendiculaire au plan de fissuration, l'écho reçu par le récepteur ne présente aucun maximum significatif au moment où le point de focalisation du faisceau atteint le front de fissuration. La courbe que l'on obtient est la courbe 1 de la figure 1. Si le faisceau est légèrement écarté de la normale au plan de fissuration (par exemple de 10°), on voit apparaître, au passage du front de fissuration, un maximum d'écho, ce qui correspond à la courbe 2 de la figure 1; cependant, ce maximum est assez peu intense par rapport au niveau de l'écho obtenu sur le plan de fissuration sans effet de bord. Si l'on augmente l'inclinaison par rapport à la normale, ce qui correspond à la courbe 3 de la figure 1, l'intensité du maximum au passage sur le front de fissuration augmente considérablement par rapport à l'intensité de l'écho sur le plan de fissuration lui-même; mais le niveau de l'écho est d'autant plus faible que l'angle $\alpha$ (c'est-à-dire le complément de l'inclinaison sur la normale) est plus faible. On est donc amené à choisir un compromis, car si l'écho est trop faible, il est difficile de le distinguer du bruit de fond. Selon l'invention, on a constaté que ce compromis était convenable lorsque l'angle $\alpha$ est compris entre 10° et 80°.

L'intérêt du procédé selon l'invention et du dispositif, qui permet sa mise en oeuvre, est considérable car on peut ainsi définir avec précision à chaque instant, dans une pièce en cours de fissuration la position du bout de la fissure (c'est-à-dire du point $S_0$), alors qu'auparavant ce positionnement n'était possible qu'avec une imprécision notable. Cette définition peut être obtenue qu'il s'agisse d'une pièce soumise à des épreuves de fatique ou d'une pièce en cours de déchirure ductile. Par ailleurs, l'invention permet de définir, à chaque instant, la forme du front de fissuration, ce qui était totalement impossible avec les méthodes antérieures.

Pour mieux faire comprendre l'objet de l'invention, on va en décrire maintenant, à titre d'exemple purement illustratif en non limitatif, un mode de réalisation représenté sur les dessin annexé.

Sur ce dessin:

—la figure 1 représente trois courbes donnant, en fonction du déplacement d du transducteur générateur d'ultra-sons par rapport à la pièce étudiée, l'intensité I de l'écho reçu par le récepteur et montrant, notamment, l'intensité de l'écho au moment du passage du faisceau focalisé sur le front de fissuration pour l'abscisse $d_0$, les courbes 1, 2, 3 étant établies respectivement pour des valeurs de l'angle α égales à 90, 70 et 5°;

—la figure 2 représente, schématiquement en perspective, l'extrémité d'une éprouvette métallique standard utilisée pour l'étude de la fissuration sous fatigue (contrainte cyclique) ou l'étude de la déchirure ductile (charge monotone croissante);

—la figure 3 représente, schématiquement, l'éprouvette de la figure 2 coupée dans le plan P de la fissuration, la courbe F figurant le front de fissuration à un moment donné de l'expérimentation;

—la figure 4 représente, schématiquement, l'éprouvette de la figure 2 et l'orientation de l'axe A du faisceau d'ultra-sons focalisé par rapport à ladite éprouvette, en supposant que le traducteur générateur d'ultra-sons soit extérieur à ladite éprouvette;

—la figure 5 représente, schématiquement, le plan de fissuration de l'éprouvette de la figure 2 en y faisant figurer les positions successives du front de fissuration;

—la figure 6 représente, schématiquement, en projection sur le plan de fissuration de l'éprouvette de la figure 2, le mode de ré-orientation et de décalage transversal de l'axe A du faisceau d'ultra-sons focalisé quand on s'écarte du plan de symétrie $P_0$ et l'éprouvette;

—la figure 7 est une représentation similaire à celle de la figure 6 pour une variante de mise en oeuvre du procédé selon l'invention;

—la figure 8 représente, schématiquement, un dispositif selon l'invention permettant la détermination du fond (ou bout) de fissure, de la forme du front de fissuration et de son déplacement au cours du temps.

En se référant au dessin, on voit que l'on a désigné par 4 dans son ensemble, sur les figures 2 et 8, une éprouvette en acier destinée à l'étude de la fissuration sous contrainte cyclique (fatigue) ou de la déchirure ductile sous charge monotone croissante. Cette éprouvette 4 est destinée à être mise en place dans une machine de traction de type connu dont le mors supérieur 5 (voir figure 8) est fixe et dont le mors inférieur 6 est soumis à l'effort que l'on désire appliquer à l'éprouvette au moyen d'un organe de mise en charge 7. Les efforts sont appliqués à l'éprouvette selon les flèches G (voir figure 2) par l'intermédiaire d'axes passant dans les trous 8. La forme de l'éprouvette est définie de façon standard: l'éprouvette comporte une échancrure 9, qui se prolonge dans son plan médian par une entaille 10, dont le fond est biseauté. Lorsque la charge est appliquée à l'éprouvette, il se produit une fissuration et la fissure se développe dans le plan P (voir figure 3), qui est perpendiculaire aux efforts et constitue un plan de symétrie pour l'éprouvette 4. L'éprouvette 4 comporte un plan de symétrie transversal $P_0$, qui est perpendiculaire à P, l'intersection de P et de $P_0$ définissant la direction D de propagation de la fissure. A un moment donné quelconque de la fissuration, le front de fissuration F est une courbe, de forme souvent parabolique, comme représenté sur les figures 3, 5, 6 et 7. Le sommet de cette courbe F est un point $S_0$, qui constitue le fond (ou bout) de fissure dans $P_0$. La figure 5 représente le déplacement au cours du temps et la variation de forme du front de fissuration F; on voit que le front de fissuration débouche à l'extérieur de l'éprouvette en des points dont la progression dans la direction D n'est pas égale à la progression du fond de fissure; ceci explique qu'il n'est pas possible de se repérer au développement extérieur de la fissure pour connaître l'état de fissuration de l'éprouvette 4.

Selon le procédé de l'invention, on soumet l'éprouvette 4 à un faisceau d'ultra-sons désigné par 11 sur la figure 3. Le faisceau 11 a son point focal acoustique sensiblement dans le plan P. L'axe A du faisceau 11 fait avec le plan P un angle α. Selon les propriétés de propagation des ultra-sons dans les différents milieux concernés, on sait que, pour obtenir, à l'intérieur de l'éprouvette une inclinaison α de l'axe A par rapport au plan P, il faut faire entrer le faisceau dans l'éprouvette 4 en imposant à son axe A un angle d'inclinaison α' par rapport à la face d'entrée dans l'éprouvette (voir figure 4).

La figure 8 représente l'un des dispositifs possibles pour générer un faisceau d'ultra-sons focalisé 11. Dans le dispositif décrit, on utilise un "traducteur" 12 ayant une face inférieure concave immergée dans un bac d'eau 13 mis en place sur la surface supérieure de l'éprouvette 4. Le traducteur 12 peut être un traducteur plan associé à une lentille plan concave réalisée en un matériau plastique tel que celui connu sous la dénomination commerciale "araldite" ou un traducteur plan concave. La partie active du traducteur est une couche pseudo piézo-électrique constituée, par exemple, d'un matériau fritté (titanate de barium/zirconate de barium); les faces du matériau pseudo piézo-électrique sont métallisées et reliées à un générateur de courant électrique haute fréquence 14 produisant une fréquence de quelques MHz et émettant des trains d'impulsions à une fréquence de quelques KHz. A l'arrière de la couche piézo-électrique est disposé un matériau d'amortissement. A titre d'exemple, on peut indiquer que la couche piézo-électrique peut avoir une épaisseur d'environ 1 mm et constituer un disque (plan ou concave selon le type de traducteur) ayant un diamètre extérieur d'environ 20 mm. Il est expressément précisé que l'utilisation de ce type de "traducteur" n'est pas limitative et que tout autre type de "traducteur" peut être utilisé, dès lors qu'il permet de mettre en oeuvre un faisceau d'ultra-sons focalisé en un point du plan P.

Selon l'invention, le traducteur 12 est monté sur un organe de manoeuvre 15, qui est susceptible d'imprimer au traducteur un certain nombre de mouvements. En premier lieu, l'axe A du faisceau 11 peut être orienté pour former avec le plan P, un angle α compris entre 10 et 80° et, de préférence, voisin de 70°; en deuxième lieu, le "traducteur" 12 peut être soumis à des mouvements de translation rectilignes, ces translations pouvant être alternatives autour d'un point de référence et pouvant être soit parallèles à la direction D soit parallèles à la projection de l'axe A sur la plan P; en troisième lieu, la projection de l'axe A sur le plan P peut être orientée de façon à former un angle réglable avec l'intersection des plans P et $P_0$; en quatrième lieu, le traducteur 12 peut être soumis à des décalages transversaux par une translation parallèle au plan P. Le traducteur 12 a également une fonction de réception et l'écho qu'il reçoit à la suite de l'émission d'un train d'impulsions est envoyé sur un programmateur 16, qui commande les mouvements donnés au traducteur 12 par l'organe de manoeuvre 15. Les informations relatives à l'intensité de l'écho et éventuellement au temps de vol sont transmises à un organe de mémorisation 17 qui en fonction des informations, peut renvoyer des instructions sur le programmateur 16. L'organe de mémorisation 17 est également relié à un organe d'affichage 18, ledit affichage étant soit numérique, soit graphique.

Si l'on désire définir la position du fond de fissure $S_0$ cans le plan $P_0$, on amène l'axe A du faisceau 11 dans le plan $P_0$ et on lui imprime une translation jusqu'à ce que l'on repère un maximum de l'écho. Le réglage de l'inclinaison de l'axe A par rapport au plan P, au voisinage du plan P, est effectué de façon que ce maximum puisse aisément être discerné (voir à cet égard les explications précédemment données concernant les courbes de la figure 1). Lorsque le maximum de l'écho est repéré, le point d'intersection de l'axe A avec la plan P se trouve au point $S_0$.

Si l'on veut alors suivre le déplacement du fond de fissure au cours du temps, on imprime au traducteur 12, par l'organe de manoeuvre 15, des translations alternatives par rapport au point de référence constitué par le fond de fissure. Tant que le fond de fissure ne s'est pas déplacé de façon significative, le point de référence n'est par modifié. Par contre, dès qu'il y a un déplacement significatif du point pour lequel on obtient le maximum de l'écho, on enregistre dans l'organe de mémorisation 17 le déplacement du fond de fissure et on commande par l'organe de mémorisation 17 le programmateur 16, de façon que la transmission alternative imprimée au traducteur 12 s'effectue, par la suite, de part et d'autre d'un nouveau point de référence constitué par la nouvelle position du fond de fissure. On peut ainsi suivre en fonction du temps le déplacement du fond de fissure avec un précision particulièrement remarquable, les résultats étant affichés en fonction du temps sur l'organe d'affichage 18.

Si l'on désire définir la forme du front de fissuration après avoir positionné le fond de fissure $S_0$, on imprime au traducteur 12 un décalage transversal pour que l'axe A s'écarte du plan $P_0$ d'une valeur égale au pas du décalage, en restant parallèle à ce plan. On recommence alors à imprimer au traducteur 12 une translation parallèle à D et on repère à nouveau le maximum de l'écho ce qui permet d'obtenir le fond de fissure dans le plan perpendiculaire à P où se trouve l'axe A. On détermine ainsi point par point le front de fissuration et, simultanément, on calcule l'inclinaison de la tangente au front de fissuration par rapport au plan passant par A et perpendiculaire à P: initialement, cet angle est de 90° et il décroît; lorsqu'il atteint la valeur de 75°, on réoriente l'axe A par une rotation du traducteur commandé par l'organe de manoeuvre 15 de façon à l'amener dans un plan perpendiculaire à la tangente au front de fissuration au point considéré; l'axe A est alors dans un plan Q dont la trace dans le plan P a été désigné par Q sur les figures 6 et 7. On poursuit ensuite la détermination du front de fissuration en imprimant à nouveau au traducteur 12 des translations alternatives de part et d'autre du point de référence constitué par le fond de fissure S dans le plan Q; ces translations peuvent être ou bien parallèles à $P_0$, comme indiqué sur la figure 6, ou bien parallèles à Q, comme indiqué sur la figure 7. Puis, pour poursuivre la définition du front de fissuration, on décale le traducteur 12 d'une valeur e, ce décalage étant effectué soit perpendiculairement au plan $P_0$, soit parallèlement au plan Q, selon que l'on se trouve dans le cas des figures 6 ou 7, respectivement.

On voit donc que la mise en oeuvre du dispositif selon l'invention permet, non seulement, de positionner avec précision le fond de fissure et de mesurer son déplacement au cours du temps, mais également de définir avec précision la forme exacte du front de fissuration et, bien entendu, l'évolution de cette forme au cours du temps lorsque le front de fissuration se déplace selon la direction D.

**Revendications**

1. Procédé pour détecter la position d'au moins un point d'un front de fissuration à l'intérieur d'une pièce comportant, sensiblement dans un plan P, une fissuration ou une déchirure ductile de part et d'autre d'un plan moyen $P_0$ perpendiculaire à P, ledit procédé consistant à envoyer sur le plan de fissure P un faisceau incident d'ultrasons d'axe A, à repérer sur un organe récepteur l'intensité de l'écho obtenu par diffraction sur P, à déplacer l'axe vers le front de fissuration jusqu'au repérage d'un maximum de l'écho, et à en déduire une évaluation de la position du fond de fissure, caractérisé par le fait que:
—si le plan P n'est pas défini de façon suffisamment précise, on détermine ledit plan P de façon connue, en mesurant le temps de vol de l'onde ultra-sonore qu'il diffracte;
—on utilise ensuite un faisceau incident d'ultrasons, qui est focalisé de telle façon que le plan P coupe sa zone utile et fasse avec son axe A un angle α compris entre 10° et 80° environ;

—on oriente ledit faisceau de sorte que le plan Q normal à P passant par A soit sensiblement perpendiculaire au front de fissuration;

—le déplacement de l'axe A vers le front de fissuration jusqu'au repérage d'un maximum de l'écho s'effectue parallèlement à P, le point S, qui est l'intersection de A et P, étant alors le fond de fissure dans le plan Q.

2. Procédé selon la revendication 1, caractérisé par le fait que l'angle α est compris entre 60° et 75°.

3. Procédé selon l'une des revendications 1 ou 2, caractérisé par le fait que l'on commence la détection en amenant le plan Q à être sensiblement confondu avec $P_0$.

4. Procédé selon l'une des revendications 1 à 3, destiné à suivre le déplacement, selon une direction D, du fond de fissure au cours du temps, caractérisé par le fait qu'on assure une translation alternative de l'axe A parallèlement à D, de part et d'autre de la position ayant donné lieu au repérage de S et, dès que l'on constate une variation significative de la position de l'axe A du faisceau incident pour le maximum de l'écho, on repère la nouvelle position S' du fond de fissure et on remplace S par S' comme point de référence de la translation alternative de A.

5. Procédé selon la revendication 3, destiné à définir la forme du front de fissuration dans la pièce étudiée caractérisé par le fait qu'après avoir déterminé le fond de fissure $S_0$ situé dans $P_0$, on décale l'axe A du faisceau perpendiculairement au plan $P_0$ pour l'amener dans un plan $P_1$ parallèle à $P_0$, qu'on déplace ensuite l'axe A parallèlement à $P_0$ jusqu'au repérage d'un maximum de l'écho pour positionner le fond de fissure dans $P_1$ et ainsi de suite, de proche en proche, jusqu'à ce que la tangente T au front de fissuration ainsi défini fasse avec sa position initiale dans la séquence un angle β prédéterminé compris entre 5° et 30° environ.

6. Procédé selon la revendication 5, caractérisé par le fait que lorsque la tangente T fait avec sa position initiale dans la séquence, un angle β compris entre 5° et 30°, on ré-oriente l'axe A de façon que la plan Q fasse, avec sa position initiale dans la séquence, un angle inférieur à 2β par exemple compris entre β et 2β et on imprime à nouveau à l'axe A une succession de séquences formées par un déplacement en vue de la détection d'un maximum de l'écho et un décalage transversal par rapport audit déplacement.

7. Procédé selon l'une des revendications 5 ou 6, caractérisé par le fait que 10≤β≤20°.

8. Procédé selon la revendication 6, caractérisé par le fait qu'après la ré-orientation de l'axe A, on déplace l'axe A parallèlement à $P_0$ et on le décale transversalement perpendiculairement à $P_0$.

9. Procédé selon la revendication 6, caractérisé par le fait qu-après la ré-orientation de l'axe A, on déplace A parallèlement à l'intersection de P avec le plan Q et on le décale transversalement perpendiculairement à Q.

10. Dispositif pour la mise en oeuvre du procédé selon l'une des revendications 1 à 9, comportant des moyens de fixation (5) d'une pièce étudiée (4), des moyens (6) pour imprimer à ladite pièce des efforts mécaniques aboutissant à provoquer sensiblement dans un plan P de la pièce une fissuration ou une déchirure ductile, au moins un traducteur (12) générateur d'ultrasons susceptible de fournir un faisceau incident (11) focalisé et au moins un traduction récepteur (12) susceptible de repérer l'intensité de l'écho provenant d'une zone de la pièce, caractérisé par le fait que le traducteur générateur (12) fournit un faisceau incident (11) d'ultrasons focalisé de telle sorte que le plan P coupe sa zone utile et fasse avec son axe A un angle α compris entre 10° et 80° environ et que le dispositif comporte des moyens d'orientation (15) de l'axe A autour d'une axe perpendiculaire P, des moyens de déplacement (15) en translation de l'axe A parallèlement à une première direction du plan P et des moyens de décalage transversal (15) par une translation de l'axe A, parallèlement à une deuxième direction du plan P.

11. Dispositif selon la revendication 10, caractérisé par le fait que 60<α<75.

12. Dispositif selon l'une des revendications 10 à 11, caractérisé par le fait que les moyens de déplacement (15) de l'axe A en translation sont assujettis à un moyen de commande (16) permettant d'assurer soit une translation continue jusqu'au repérage d'un maximum d'écho par le récepteur 12) suivie d'un mouvement retour, soit une translation alternative autour d'un point de référence, pour lequel le récepteur repère un maximum d'écho, avec mémorisation du déplacement dudit point de référence au cours du temps.

13. Dispositif selon l'une des revendications 10 à 12, caractérisé par le fait que les moyens de décalage transversal (15) de l'axe A provoquent une translation dudit axe selon une deuxième direction, qui est peperndiculaire à la première direction.

14. Dispositif selon l'une des revendications 10 à 13, caractérisé par le fait que les moyens de déplacement en translation (15) de l'axe A assurent une translation sur une première direction unique positionnée par rapport aux moyens de fixation (5) de la pièce.

15. Dispositif selon l'une des revendications 10 à 14, caractérisé par le fait que le traducteur (12) utilisé est un transducteur plan focalisé par une lentille plan-concave, ou un transducteur concave, ou une mosaïque de transducteurs élémentaires focalisés électroniquement ou à la réception, ou encore un transducteur électrodynamique focalisant.

16. Dispositif selon l'une des revendications 10 à 15, caractérisé par le fait que les moyens (15) d'orientation et de déplacement ou décalage en translation de l'axe A sont, à partir de la détection du fond de fissure $S_0$ situé dans la plan moyen $P_0$ de part et d'autre duquel est disposé le front de fissuration, commandés de façon automatique par un programmateur (16), la position géométrique de tout ou partie du front de fissuration (F) et son déplacement au cours du temps étant mémorisés informatiquement en vue d'une restitution numérique et/ou graphique.

## Patentansprüche

1. Verfahren zur Bestimmung der Position von mindestens einem Punkt einer Rißbildungsstirnseite im Innerern eines Werkstückes, welches im wesentlichen in einer Ebene P eine Rißbildung oder eine Rißverformung beiderseits einer zur Ebene P senkrechten Mittelebene $P_0$ aufweist,

wobei man

auf die Rißebene P einen Ultraschall-Einfallsstrahl mit einer Achse A sendet,

mit einem Empfänger die Intensität eines durch Ablenkung an der Ebene P erhaltenen Echos erfaßt,

die Achse gegenüber der Rißbildungsstirnseite soweit verschiebt, bis man ein Maximum des Echos erfaßt, und

die Position des Rißbodens berechnet,

dadurch gekennzeichnet, daß man

—wenn die Ebene P nicht hinreichend genau definiert ist, die Ebene P in bekannter Weise bestimmt, indem man die Laufzeit des an ihr abgelenkten Ultraschallstrahls mißt;

—anschließend einen Ultraschall-Einfallsstrahl anwendet, der so fokussiert ist, daß die Ebene P dessen nutzbaren Bereich schneidet und mit dessen Achse A einen Winkel α von etwa 10° bis 80° einschließt;

—den Strahl so ausrichtet, daß die zu P senkrechte, durch A verlaufende Ebene Q im wesentlichen senkrecht zur Rißbildungsstirnseite verläuft;

—die Achse A gegen die Rißbildungsstirnseite bis zur Erfassung eines Maximums des Echos parallel zu P verschiebt, wobei der Punkt S, der dem Schnittpunkt von A und P entspricht, der Rißboden in der Ebene Q ist.

2. Verfahren nach Anspruch 1, dadurch gekennzeichnet, daß der Winkel α 60° bis 75° beträgt.

3. Verfahren nach einem der Ansprüche 1 oder 2, dadurch gekennzeichnet, daß man die Erfassung beginnt, indem man die Ebene Q mit $P_0$ im wesentlichen zur Deckung bringt.

4. Verfahren nach einem der Ansprüche 1 bis 3, zur Beobachtung der Verlagerung des Rißbodens in einer Richtung D in Abhängigkeit von der Zeit, dadurch gekennzeichnet, daß man

eine alternierende Translationsbewegung der Achse A beiderseits der Position für die Erfassung von S, parallel zu D durchführt, und

die neue Position S' des Rißbodens bestimmt, sobald man eine signifikante Positionsänderung der Achse A des Einfallsstrahls für das Maximum des Echos feststellt und S durch S' als Bezugspunkt der alternierende Translationsbewegung von A ersetzt.

5. Verfahren nach Anspruch 3, zur Bestimmung der Form der Rißbildungsstirnseite in dem zu untersuchenden Werkstück, dadurch gekennzeichnet, daß man

nach der Bestimmung des Rißbodens $S_0$ in der Ebene $P_0$ die Achse A des Strahls senkrecht zur Ebene $P_0$ versetzt, um sie in eine Ebene $P_1$ parallel zu $P_0$ zu bringen,

anschließend die Achse A parallel zu $P_0$ verschiebt bis man ein Maximum des Echos erfaßt um den Rißboden in $P_1$ zu lokalisieren und dies Schritt für Schritt wiederholt, bis die Tangente T der so definierten Rißbildungsstirnseite gegenüber ihrer Ausgangslage einen vorgegebenen Winkel β von etwa 5° bis 30° einnimmt.

6. Verfahren nach Anspruch 5, dadurch gekennzeichnet, daß man,

wenn die Tangente T gegenüber ihrer Ausgangslage einen Winkel β von 5° bis 30° einnimmt, die Achse A reorientiert, so daß die Ebene Q gegenüber ihrer Ausgangslage einen Winkel einnimmt, der kleiner als 2β ist und beispielsweise zwischen β und 2β liegt, und

mit der Achse A erneut eine Folge von Einstellungen, bestehend aus einer Verschiebung zur Bestimmung des Echos und einer Versetzung quer zur Verschiebung vornimmt.

7. Verfahren nach einem der Ansprüche 5 oder 6, dadurch gekennzeichnet, daß $10° \leqslant β \leqslant 20°$ ist.

8. Verfahren nach Anspruch 6, dadurch gekennzeichnet, daß man nach der Reorientierung der Achse A diese parallel zu $P_0$ verschiebt und sie seitlich und senkrecht zu $P_0$ versetzt.

9. Verfahren nach Anspruch 6, dadurch gekennzeichnet, daß man nach der Reorientierung der Achse A diese parallel zum Schnitt von P mit der Ebene Q verschiebt und sie seitlich und senkrecht zu Q versetzt.

10. Vorrichtung zur Durchführung eines Verfahrens nach einem der Ansprüche 1 bis 9, mit

Feststellmitteln (5) für das zu untersuchende Werkstück (4), Mittel (6) um mechanische Kräfte auf das Werkstück einwirken zu lassen, um im wesentlichen in der Ebene P des Werkstückes eine Rißbildung oder eine Rißverformung hervorzurufen, einem Ultraschallgenerator (12) für die Abgabe eines fokussierten Strahls (11) und mindestens einem Empfänger (12), um die Intensität des von einem Abschnitt des Werkstückes ausgehenden Echos zu erfassen,

dadurch gekennzeichnet, daß

der Ultraschallgenerator (12) einen fokussierten Ultraschall-Einfallsstrahl (11) abgibt, derart daß die Ebene P dessen nutzbaren Bereich schneidet und zu dessen Achse A einen Winkel α von etwa 10° bis 80° einnimmt, und

die Vorrichtung Richtmittel (15) für die Ausrichtung der Achse A um eine Achse senkrecht zu P, Mittel (15) zur Längsverschiebung der Achse A parallel zu einer ersten Richtung auf der Ebene P und Mittel (15) zur seitlichen Versetzung der Achse A, parallel zu einer zweiten Richtung auf der Ebene P umfaßt.

11. Vorrichtung nach Anspruch 10, dadurch gekennzeichnet, daß $60° < α < 75°$ ist.

12. Vorrichtung nach einem der Ansprüche 10 und 11, dadurch gekennzeichnet, daß die Mittel (15) zur Längsverschiebung der Achse A an einer Steuerung (16) so befestigt sind, daß einerseits eine kontinuierliche Verschiebung bis zur Erfassung eines Maximums des Echos durch den Empfänger (12), gefolgt von einer umgekehrten Bewegung, und andererseits eine alternierende Verschiebung um einen Bezugspunkt herum, für welchen der Empfänger ein Maximum des Echos erfaßt, gewährleistet ist, wobei die zeitliche Verschiebung des Bezugspunktes gespeichert wird.

13. Vorrichtung nach einem der Ansprüche 10 bis 12, dadurch gekennzeichnet, daß die Mittel (15) zur seitlichen Versetzung der Achse A eine Bewegung der Achse in einer zweiten Richtung, senkrecht zur ersten Richtung bewirken.

14. Vorrichtung nach einem der Ansprüche 10 bis 13, dadurch gekennzeichnet, daß die Mittel (15) zur Längsverschiebung der Achse A eine Bewegung in einer ersten Richtung sicherstellen, die durch die Feststellmittel (5) des Werkstückes einmal eingestellt wird.

15. Vorrichtung nach einem der Ansprüche 10 bis 14, dadurch gekennzeichnet, daß der verwendete Ultraschallgenerator (12) ein Transducer ist, der mit einer plan-konkaven Linse in der Ebene fokussiert wird, oder ein konkaver Transducer ist, oder aus einzelnen Transducer-Elementen zusammengesetzt ist, die elektronisch oder beim Empfang fokussiert werden, oder ein elektrodynamisch fokussierender Transducer ist.

16. Vorrichtung nach einem der Ansprüche 10 bis 15, dadurch gekennzeichnet, daß die Mittel (15) zum Ausrichten und Verschieben oder Versetzen der Achse A für die Detektion des Rißbodens $P_0$ in der Mittelebene $P_0$, zu deren beiden Seiten die Rißbildungsstirnseite verläuft, von einem Programmsteuergerät (16) gesteuert werden, wobei die geometrische Position der gesamten Rißbildungsstirnseite (F) oder eines Teils davon und deren zeitliche Verschiebung für eine numerische und/oder graphische Wiedergabe als Information gespeichert werden.

**Claims**

1. A method for detecting the position of at least one point of a cracking front in a part comprising, substantially in a plane P, a crack or a ductile tear on either side of a median plane $P_0$ perpendicular to P, the said method consisting in directing an incident ultrasonic beam with axis A onto the crack plane P, registering on a receiving element the intensity of the echo obtained by diffraction on P, displacing the axis towards the cracking front until the maximum echo is registered and deducting therefrom an evaluation of the position of the crack tip, characterized in that:
—if plane P is not defined sufficiently precisely, the said plane P is determined in the known way by measuring the time of travel of the ultrasonic wave diffracted by it;
—subsequently, an incident ultrasonic beam is used which is focused in such a way that the pulse P intersects its effective zone and forms with its axis A an angle $\alpha$ comprised approximately between 10° and 80°;
—the said beam is orientated so that the plane Q normal to P passing through A should be substantially perpendicular to the cracking front;
—the displacement of the axis A towards the cracking front until the maximum echo is registered is effected parallel to P, the point S which is the intersection of A and P, then being the crack tip in plane Q.

2. A method according to claim 1, characterized in that the angle $\alpha$ is comprised between 60° and 75°.

3. A method according to one of claims 1 or 2, characterized in that the detection is started by causing the plane Q to be substantially identical with $P_0$.

4. A method according to one of claims 1 to 3, intended to follow the displacement along direction D of the crack tip with respect to time, characterized in that an alternate translation of axis A is ensured parallel to D on either side of the position having given rise to the location of S, and when a significant variation of the position of axis A of the incident beam is found for the echo maximum, the new position of the crack tip is marked S', and S is replaced by S' as the reference point for the alternate translation of A.

5. A method according to claim 3, intended to define the shape of the cracking front in the part investigated, characterized in that after determining the crack tip $S_0$ situated in plane $P_0$, the axis A of the beam is displaced perpendicular to the plane $P_0$ to bring it into a plane $P_1$ parallel to $P_0$, in that the axis A is then displaced parallel to $P_0$ until a maximum echo is registered for positioning the crack tip in $P_1$ and so on, step by step, until the tangent T at the cracking front thus defined forms in the sequence a predetermined angle $\beta$ with its initial position which is comprised between approximately 5° and 30°.

6. A method according to claim 5, characterized in that when the tangent T forms with its initial position in the sequence an angle $\beta$ comprised between 5° and 30°, the axis A is reorientated so that the plane Q forms with its initial position in the sequence an angle smaller than $\beta$, comprised for instance, between $\beta$ and $2\beta$, and in that the axis A is again subjected to a succession of sequences formed by a displacement with a view to detecting an echo maximum and a transverse shift in relation to the said displacement.

7. A method according to one of claims 5 or 6, characterized in that $10 \leq \beta \leq 20°$.

8. A method according to claim 6, characterized in that after the reorientation of axis A, it is displaced parallel to $P_0$, and in that it is offset transversely perpendicular to $P_0$.

9. A method according to claim 6 characterized in that after the reorientation of the axis A, A is displaced parallel to the intersection of P with the plane Q, and in that it is offset transversely perpendicular to Q.

10. A device for the implementation of the method according to one of claims 1 to 9, comprising means (5) for fixing a test part (4), means (6) for subjecting the said part to mechanical stresses leading to cracking or a ductile tear substantially in a plane P of the part, at least one transducer (12) generating ultrasounds capable of providing a focused incident beam (11), and at least one receiving transducer (12) capable of registering the intensity of the echo coming from the zone of the part, characterized in that the generating transducer (12) provides an incident ultrasonic beam (11) focused in such a way that the plane P intersects its effective zone and forms an angle $\alpha$ with its axis A which is comprised approximately between 10° and 80°, and in that the device comprises means (15) for orientating axis A round a perpendicular axis P, means (15) for displacing the axis A in translation parallel to a first direction of the plane P, and means (15) for a transverse displacement by a translation of axis A parallel to a second direction of the plane P.

11. A device according to claim 10 characterized in that $60 < \alpha < 75°$.

12. A device according to one of claims 10 to 11, characterized in that the means (15) for displacing axis A in translation are subjected to a control means (16) ensuring either a continuous translation until the maximum echo has been registered by the receiver (12) followed by a return movement, or an alternating translation round a reference point in respect of which the receiver registers a maximum echo with the memorization of the displacement of the said reference point with respect to time.

13. A device according to one of claims 10 to 12, characterized in that the means (15) for the transverse displacement of axis A produce a translation of the said axis along a second direction which is perpendicular to the first direction.

14. A device according to one of claims 10 to 13, characterized in that the means (15) for the translational displacement of axis A ensure a translation in a single first direction which is positioned relative to the means (5) for fixing the part.

15. A device according to one of claims 10 to 14, characterized in that the transducer (12) used is a planar transducer focused by a plano-concave lens or a concave transducer or a mosaic of elementary transducers electronically focused either at reception or yet an electro-dynamic focusing transducer.

16. A device according to one of claims 10 to 15, characterized in that, starting with the detection of the crack tip $S_0$ situated in the median plane $P_0$ on either side whereof the cracking front is disposed, the means (15) for the orientation and displacement or translational shift of axis A are automatically controlled by a programming unit (16), the geometrical position of the whole or part of the cracking front (F) and its displacement with respect to time being memorized by computing means with a view to a numerical and/or graphic read-out.

FIG. 1

FIG. 2

FIG. 3

FIG. 4

FIG. 5

FIG. 6

FIG. 7

FIG. 8